# EUROPEAN PATENT SPECIFICATION

(11) **EP 4 550 269 B1**
(45) Date of publication and mention of the grant of the patent: **12.08.2026**
(21) Application number: 23830139.4
(22) Date of filing: 25.06.2023
(51) Int. Cl.: G06T 15/00, G06T 19/20

(54) **SCANNED IMAGE RENDERING METHOD AND APPARATUS, ELECTRONIC DEVICE AND STORAGE MEDIUM**
VERFAHREN UND VORRICHTUNG ZUR DARSTELLUNG ABGETASTETER BILDER, ELEKTRONISCHE VORRICHTUNG UND SPEICHERMEDIUM
PROCÉDÉ ET APPAREIL DE RENDU D'IMAGE BALAYÉE, DISPOSITIF ÉLECTRONIQUE ET SUPPORT DE STOCKAGE

(30) Priority: 29.06.2022 CN 202210757474
(43) Date of publication of application: 07.05.2025
(73) Proprietor: Shining 3D Tech Co., Ltd., Hangzhou, Zhejiang 311258 (CN)
(72) Inventor: ZHAO, Bintao, Hangzhou, Zhejiang 311258 (CN); LIN, Zhongwei, Hangzhou, Zhejiang 311258 (CN); ZHANG, Jian, Hangzhou, Zhejiang 311258 (CN); JIANG, Tengfei, Hangzhou, Zhejiang 311258 (CN)
(74) Representative: Novagraaf Group
(86) International application number: PCT/CN2023/102127
(87) International publication number: WO 2024/001961

(56) References cited:
- CN-A- 112 037 320
- CN-A- 112 348 957
- CN-A- 112 755 535
- CN-A- 115 170 714
- US-A1- 2021 192 789
- US-B1- 6 750 873
- LIN JINGYU ET AL: "Application of backpack Lidar to geological cross-section measurement", PROCEEDINGS OF SPIE; [PROCEEDINGS OF SPIE ISSN 0277-786X VOLUME 10524], SPIE, US, vol. 10605, 15 November 2017 (2017-11-15), pages 106050J - 106050J, XP060098569, ISBN: 978-1-5106-1533-5, DOI: 10.1117/12.2295060
- DAEYOON MOON ET AL: "Comparison and utilization of point cloud generated from photogrammetry and laser scanning: 3D world model for smart heavy equipment planning", AUTOMATION IN CONSTRUCTION, vol. 98, 1 February 2019 (2019-02-01), AMSTERDAM, NL, pages 322 - 331, XP055618244, ISSN: 0926-5805, DOI: 10.1016/j.autcon.2018.07.020
- ANONYMOUS: "Tutorial A07/2 : Control point registration - 3Dflow", 27 October 2020 (2020-10-27), XP093293738, Retrieved from the Internet <URL:https://web.archive.org/web/20201027005647/https://www.3dflow.net/technology/documents/3df-zephyr-tutorials/tutorial-control-point-registration/>
- KHOSRAVANI ALI ET AL: "CO-REGISTRATION OF KINECT POINT CLOUDS BASED ON IMAGE AND OBJECT SPACE OBSERVATIONS", 1 December 2012 (2012-12-01), XP093293743, Retrieved from the Internet <URL:https://ifpwww.ifp.uni-stuttgart.de/publications/2012/LC3D-2012-KhosravaniEtAl.pdf>

## Description

The present disclosure claims priority to Chinese Patent Application No. 202210757474.5 filed to the China National Intellectual Property Administration on June 29, 2022 and entitled "Method and Apparatus for Rendering Scanning Image, and Electronic Device and Storage Medium".

### Technical Field

The present disclosure relates to the technical field of image processing, and in particular, to a method and apparatus for rendering scanning image, and an electronic device and a storage medium.

### Background

In related art, a real-time scanning technology is a technology that inputs single-frame data of a camera coordinate system of a scanner, outputs a position of a frame, and dynamically displays information.

Generally, for the same model, when the number of frames of a scanning image is small, the quality of a model obtained by post-processing is relatively poor. However, in a scanning process, a user is unable to know surface quality, and does not know which region needs to be scanned to acquire more frames of images, leading to poor quality of a surface of a model finally obtained. "Application of backpack Lidar to geological cross section measurement", by Jingyu Lin et al 2017 and published on 15 November in PROCEEDINGS OF SPIE; [PROCEEDINGS OF SPIE ISSN 0277-786X VOLUME 10524], SPIE, US, vol. 10605, pages 106050J-106050J, (DOI: 10.1117/12.2295060 ISBN: 978-1-5106-1533-5) discloses a backpack LiDAR system using SLAM to acquire dense 3D point clouds in the field, combined with camera images and point-coordinate methods, to generate accurate geological cross-sections and 3D models.

### Summary

The present invention is defined by the appended independent claims.

### (I) Technical problem to be solved

The technical problem to be solved in the present disclosure is to solve the following problem. For the same model, when the number of frames of a scanning image is small, the quality of a model obtained by post-processing is relatively poor. However, in a scanning process, a user is unable to know surface quality, and does not know which region needs to be scanned to acquire more frames of images, leading to poor quality of a surface of a model finally obtained.

### (II) Technical solution

In order to solve the above technical problem, the present disclosure provides a method and apparatus for rendering scanning image, and an electronic device and a storage medium.

### (III) Beneficial effects

The above technical solutions provided in the embodiments of the present disclosure have the following advantages compared with the related art.

According to the scanning image rendering solution provided in the embodiments of the present disclosure, the current frame scanning image is acquired; the information of all control points in the fusion field is updated according to the point cloud corresponding to the current frame scanning image, so as to obtain the target fusion field; the display point cloud and the weight of each display point in the display point cloud are acquired from the target fusion field, and based on the weight of each display point in the display point cloud, each display point and the rendering color of the region in which each display point is located are determined; and the display point cloud is rendered based on the rendering color, so as to obtain and display the rendering result. By using the above technical solution, in a scanning process, the quality of a scanning surface is prompted through real-time pseudo color rendering, so as to know which region needs to be scanned for more frames of images, thereby further improving the quality of a scanning model.

It should be understood that, the above general description and the following detailed description are merely exemplary and explanatory, and cannot limit the present disclosure.

### Brief Description of the Drawings

Drawings are incorporated into the specification and constitute a part of the specification. The drawings illustrate embodiments in accordance with the present disclosure and serve to understand the principles of the present disclosure together with the specification.

In order to more clearly illustrate the embodiments of the present disclosure or the technical solutions in the related art, the drawings used in the description of the embodiments or the related art will be briefly described below. It is apparent that other drawings can be obtained from those skilled in the art according to these drawings without any creative work.
Fig. 1 is a schematic flowchart of a method for rendering scanning image according to embodiments of the present disclosure.
Fig. 2 is a schematic flowchart of another method for rendering scanning image according to embodiments of the present disclosure.
Fig. 3 is a schematic structural diagram of an apparatus for rendering scanning image according to embodiments of the present disclosure.
Fig. 4 is a schematic structural diagram of an electronic device according to embodiments of the present disclosure.

### Detailed Description of the Embodiments

In order to make objectives, technical solutions, and advantages of embodiments of the present disclosure clearer, the technical solutions in the embodiments of the present disclosure will be clearly and completely described below. It is apparent that the described embodiments are only part of the embodiments of the present disclosure, not all the embodiments.

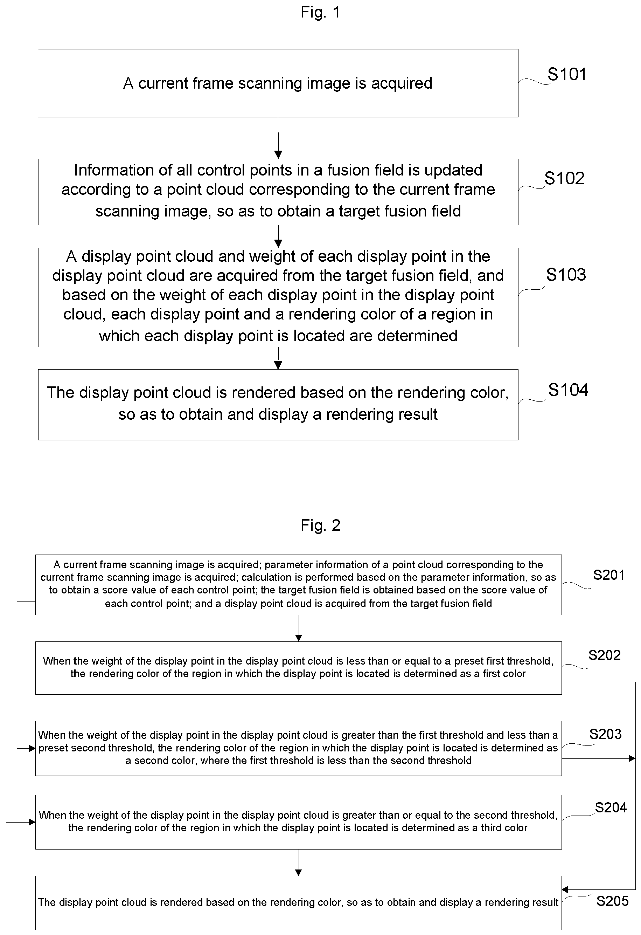

Fig. 1 is a schematic flowchart of a method for rendering scanning image according to embodiments of the present disclosure. The method may be executed by an apparatus for rendering scanning image. The apparatus may be implemented by using software and/or hardware, and may generally be integrated in an electronic device. As shown in Fig. 1, the method includes the following steps.

At S101, A current frame scanning image is acquired.

At S102, information of all control points in a fusion field is updated according to a point cloud corresponding to the current frame scanning image, so as to obtain a target fusion field.

The current frame scanning image refers to a current frame image that is acquired through scanning by a scanner camera at the current time in a real-time scanning process. The current frame scanning image corresponds to the point cloud on a surface of an object seen by the camera at the current moment. Each point cloud (scanned point) includes a position, a normal direction, a color, and weight information. The weight is the confidence level of the point cloud, and **is** calculated and acquired based on a reconstruction algorithm.

The fusion field is composed of some control points uniformly distributed. These control points (which transit between scanning and actual objects) are distributed on a scanning surface, and each control point controls scores within a certain range. The score of any point (all points on the scanning surface (actual existence)) in a scanned space is obtained by superimposing these control points. The control point is equivalent to a transfer station, so as to control a point on an image frame obtained through scanning and a point of an actual object.

A real surface of a scanned object is composed of (countless points) points with scores being 0 in a space. The fusion field is continuously updated with real-time scanning.

In some embodiments of the present disclosure, there are various methods for acquiring the current frame scanning image. For example, the current frame scanning image is acquired based on a triggering operation of a camera of a scanner by a user; and for another example, according to a preset scanning frequency, the camera is controlled to scan so as to acquire the current frame scanning image.

In some embodiments of the present disclosure, the information of all control points in the fusion field is updated according to the point cloud corresponding to the current frame scanning image, so as to obtain the target fusion field. It may be understood that, according to the point cloud (points scanned in the current frame scanning image) corresponding to the current frame scanning image, information such as positions, normal directions, colors, and weight of all control points in the fusion field is updated.

In some embodiments of the present disclosure, there are a plurality of methods for updating the information of all control points in the fusion field according to the point cloud corresponding to the current frame scanning image, so as to obtain the target fusion field. In some embodiments of the present disclosure, parameter information of a point cloud corresponding to the current frame scanning image is acquired; calculation is performed based on the parameter information, so as to obtain a score value of each control point; and the target fusion field is obtained based on the score value of each control point.

In some embodiments of the present disclosure, the weight value, normal direction, and position of the point cloud corresponding to the current frame scanning image are acquired; the score value of each control point is calculated based on the weight value, normal direction, and position; and the target fusion field is obtained based on the score value of each control point.

The above two methods are only examples of updating the information of all control points in the fusion field according to the point cloud corresponding to the current frame scanning image, so as to obtain the target fusion field. The method for updating the information of all control points in the fusion field according to the point cloud corresponding to the current frame scanning image, so as to obtain the target fusion field is not specifically limited in some embodiments of the present disclosure.

At S103, a display point cloud and weight of each display point in the display point cloud are acquired from the target fusion field, and based on the weight of each display point in the display point cloud, each display point and a rendering color of a region in which each display point is located are determined.

The display point cloud refers to control points (partial points on the scanning surface) with partial scores being 0 extracted from the fusion field, and these control points are generally uniformly distributed. Each control point (partial points on the scanning surface) includes information such as the normal direction, the position, the color (when scanning with a texture), etc. In some embodiments of the present disclosure, the weight value is further included, which indicates the quality of a surface around the control point (partial points on the scanning surface). The display point cloud is continuously updated with the fusion field.

In some embodiments of the present disclosure, there are a plurality of methods for determining the rendering color based on the weight of the display point cloud. In some embodiments of the present disclosure, when the weight of the display point in the display point cloud is less than or equal to a preset first threshold, the rendering color of the region in which the display point is located is determined as a first color; when the weight of the display point in the display point cloud is greater than the first threshold and less than a preset second threshold, the rendering color of the region in which the display point is located is determined as a second color, where the first threshold is less than the second threshold; and when the weight of the display point in the display point cloud is greater than or equal to the second threshold, the rendering color of the region in which the display point is located is determined as a third color.

At S104, the display point cloud is rendered based on the rendering color, so as to obtain and display a rendering result.

In some embodiments of the present disclosure, the display point cloud is composed of a series of points (partial points on the scanning surface). These points include position, normal direction, color, and weight information. When pseudo color rendering of an image is performed, the weight information of the points (partial points on the scanning surface) is converted into weight colors, and the weight colors are used as the colors of the points during rendering, so as to generate the rendering result.

According to the scanning image rendering solution provided in some embodiments of the present disclosure, the current frame scanning image is acquired; the information of all control points in the fusion field is updated according to the point cloud corresponding to the current frame scanning image, so as to obtain the target fusion field; the display point cloud and the weight of each display point in the display point cloud are acquired from the target fusion field, and based on the weight of each display point in the display point cloud, each display point and the rendering color of the region in which each display point is located are determined; and the display point cloud is rendered based on the rendering color, so as to obtain and display the rendering result. By using the above technical solution, in a scanning process, the quality of a scanning surface is prompted through real-time pseudo color rendering, so as to know which region needs to be scanned for more frames of images, thereby further improving the quality of a scanning model.

In addition, in some embodiments of the present disclosure, a rendering image is displayed in real time, and the user may perform supplementary scanning according to the rendering color while scanning, such that an effect of one scan in place may be achieved.

In addition, in some embodiments of the present disclosure, rendering may be performed with the weight in response to a rendering command of the user.

In some embodiments of the present disclosure, all frame scanning images are acquired; information of all control points in the fusion field is acquired according to point clouds corresponding to the all frame scanning images, so as to obtain a total fusion field; a total display point cloud is acquired from the total fusion field, and a total rendering color is determined based on a weight set of the total display point cloud; and the total display point cloud is rendered based on the total rendering color, so as to obtain and display a total rendering result.

Therefore, the diversity and accuracy of image rendering are improved based on weight rendering.

Fig. 2 is a schematic flowchart of another method for rendering scanning image according to embodiments of the present disclosure. In this embodiment, on the basis of the above embodiments, the scanning image rendering method is further optimized. As shown in Fig. 2, the method includes the following steps.

At S201, a current frame scanning image is acquired; parameter information of a point cloud corresponding to the current frame scanning image is acquired; calculation is performed based on the parameter information, so as to obtain a score value of each control point; the target fusion field is obtained based on the score value of each control point; and a display point cloud is acquired from the target fusion field.

In some embodiments of the present disclosure, the current frame scanning image is positioned through a real-time scanning technology, so as to obtain the position of the current frame scanning image. After the position of the current frame scanning image is obtained, the current frame scanning image is added to the fusion field to update the fusion field.

In some embodiments of the present disclosure, according to the point cloud (points for frame scanning) corresponding to the current frame scanning image, the information such as positions, normal directions, colors, and weight of all control points in the fusion field is updated.

In some embodiments of the present disclosure, the parameter information includes a weight value, a position, a normal direction, and a color. Performing calculation based on the parameter information, so as to obtain the score value of each control point includes: for each control point in the fusion field, searching the point cloud corresponding to the current frame scanning image according to a preset radius, so as to obtain a target point cloud set of each control point; performing calculation based on weight of the target point cloud set, so as to obtain a weight value of each control point; acquiring, from the point cloud corresponding to the current frame scanning image, a target point cloud with a smallest distance from each control point, and performing calculation based on a position, normal direction, and color of the target point cloud, so as to obtain a position, normal direction, and color of each control point; and obtaining the score value of each control point based on the weight value, position, normal direction, and color of each control point.

In some embodiments of the present disclosure, performing calculation based on the weight of the target point cloud set, so as to obtain the weight value of each control point includes: acquiring a maximum weight value based on a weight value of the target point cloud set; and using the maximum weight value as the weight value of each control point.

The preset radius may be selectively set according to application scenarios. In some embodiments of the present disclosure, the number of the radius is related to the minimum interval at which the camera reconstructs the point cloud, so as to further improve a reconstruction effect.

In some embodiments of the present disclosure, for each control point in the fusion field, all corresponding point clouds (points for frame scanning) in the current frame scanning image are searched with the preset radius, and the maximum weight value of these point clouds (searched points for frame scanning) is taken and assigned to the control point. Therefore, it ensures that each control point is only affected once, and the purpose of taking the maximum weight value is to cause weight transition of the control point to be smoother. Calculation may also be performed based on the weight value of the target point cloud set, so as to acquire an average value or weighted average value as the weight value of each control point.

In some embodiments of the present disclosure, the updating of the position, normal direction, and color information is different from the weight. The information such as the position, normal direction, and color information of each point (points for frame scanning) in the current frame scanning image are updated to the nearest control point by means of weighted averaging.

At S202, when the weight of the display point in the display point cloud is less than or equal to a preset first threshold, the rendering color of the region in which the display point is located is determined as a first color.

At S203, when the weight of the display point in the display point cloud is greater than the first threshold and less than a preset second threshold, the rendering color of the region in which the display point is located is determined as a second color, where the first threshold is less than the second threshold.

At S204, when the weight of the display point in the display point cloud is greater than or equal to the second threshold, the rendering color of the region in which the display point is located is determined as a third color.

At S205, the display point cloud is rendered based on the rendering color, so as to obtain and display a rendering result.

In some embodiments of the present disclosure, for each display point cloud (partial points on the scanning surface), its position is determined by the scores of the surrounding control points, and after the position is calculated, its normal direction, color, and weight are obtained through weighted averaging of these control points. The display point cloud is composed of a series of points (partial points on the scanning surface). These points include position, normal direction, color, and weight information. When pseudo color rendering is performed, the weight information of the points (partial points on the scanning surface) is converted into weight colors, and the weight colors are used as the colors of the points during rendering.

The first color, the second color, and the third color may be selectively set according to application scenarios. The first threshold and the second threshold may also be selectively set according to application scenarios. In some embodiments of the present disclosure, the first threshold is generally 0, and the second threshold may be acquired through testing.

In some embodiments of the present disclosure, an image frame sample set is acquired, where each image frame has corresponding weight; total weight of the image frame sample set is determined based on the weight of each image frame; an initial threshold is set, and a rendering test result is generated based on the total weight and the initial threshold; and the total weight is controlled to remain unchanged, the initial threshold is adjusted, and until the rendering test result changes, the second threshold is determined.

For example, some image frames are obtained. These image frames themselves have some weight, total weight is obtained by adding the weight together. It is difficult to know, through the total weight value, whether these image frames have been sufficient to obtain a good result during post-processing.

Therefore, testing may be performed for a plurality of times, and the second threshold is adjusted according to post-processed results. For example, the second threshold is adjusted without changing the weight, and with the post-processing being unchanged, the accuracy is maintained with a second threshold that is nearly as small as possible. If the post-processing requires less frames, the second threshold is smaller, the frames required to be scanned are less, and actual processing of a computer is harder; and if the post-processing requires more frames, the threshold is larger, the frames required to be scanned by the user are larger, a scanning operation is harder, such that the second threshold is a value that is not too large or too small.

In some embodiments of the present disclosure, the weight of the point (partial points on the scanning surface) is a scalar greater than 0, and with the increasing of the weight, the quality of the surface near the point is better. When the weight exceeds the second threshold, the quality of the surface is at its best and does not change thereafter. The second threshold is generally acquired through experimentation. The weight is between 0 and the second threshold, the value of the color is transitioned between the first color and the third color; and when the weight exceeds the second threshold, the third color is taken. Generally, the first color is red, and the third color is green. That is to say, the weight and color transition are linearly correlated such that the scanning has an even transition from red to green, thereby further meeting the visual requirements of the users.

According to the scanning image rendering solution provided in some embodiments of the present disclosure, the current frame scanning image is acquired; the parameter information of the point cloud corresponding to the current frame scanning image is acquired; calculation is performed based on the parameter information, so as to obtain the score value of each control point; the target fusion field is obtained based on the score value of each control point; and the display point cloud is acquired from the target fusion field; when the weight of the display point in the display point cloud is less than or equal to the preset first threshold, the rendering color of the region in which the display point is located is determined as the first color; when the weight of the display point in the display point cloud is greater than the first threshold and less than the preset second threshold, the rendering color of the region in which the display point is located is determined as the second color, where the first threshold is less than the second threshold; when the weight of the display point in the display point cloud is greater than or equal to the second threshold, the rendering color of the region in which the display point is located is determined as the third color; and the display point cloud is rendered based on the rendering color, so as to obtain the rendering result. By using the above technical solutions, the user is prompted for the quality of a scanning surface through different color tables in real time during scanning, so as to guarantee the quality of the surface of a model finally obtained, thereby improving user experience.

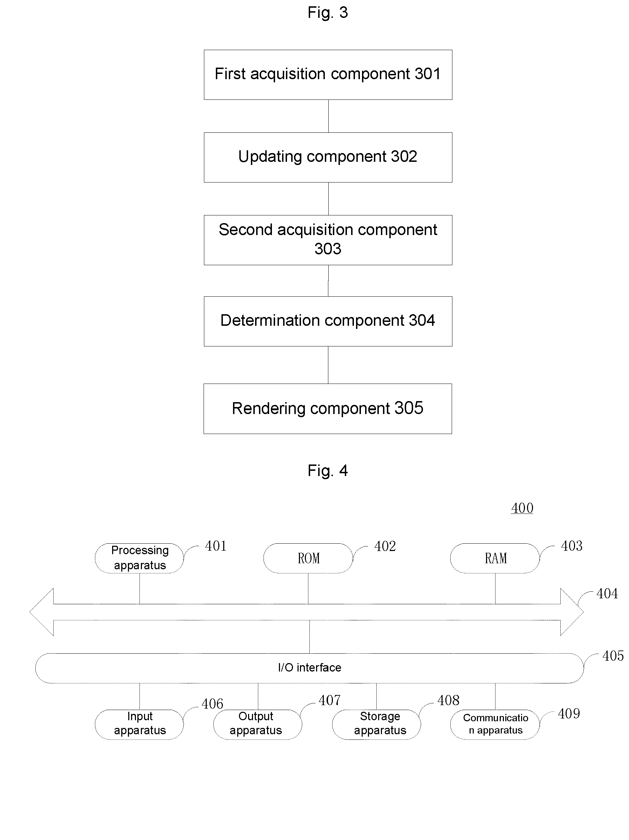

Fig. 3 is a schematic structural diagram of an apparatus for rendering scanning image according to embodiments of the present disclosure. The apparatus may be implemented by using software and/or hardware, and may generally be integrated in an electronic device. As shown in Fig. 3, the apparatus includes a first acquisition component, an updating component, a second acquisition component, a determination component, and a rendering component.

The first acquisition component 301 is configured to acquire a current frame scanning image.

The updating component 302 is configured to update information of all control points in a fusion field according to a point cloud corresponding to the current frame scanning image, so as to obtain a target fusion field.

The second acquisition component 303 is configured to acquire a display point cloud and weight of each display point in the display point cloud from the target fusion field.

The determination component 304 is configured to, based on the weight of each display point in the display point cloud, determine each display point and a rendering color of a region in which each display point is located.

The rendering component 305 is configured to render the display point cloud based on the rendering color, so as to obtain and display a rendering result.

In some embodiments of the present disclosure, the updating component 302 includes an acquisition unit, a calculation unit, and a processing unit.

The acquisition unit is configured to acquire parameter information of a point cloud corresponding to the current frame scanning image.

The calculation unit is configured to perform calculation based on the parameter information, so as to obtain a score value of each control point.

The processing unit is configured to obtain the target fusion field based on the score value of each control point.

In some embodiments of the present disclosure, the parameter information includes a weight value, a position, a normal direction, and a color. The processing unit includes a searching sub-unit, a calculation sub-unit, an acquisition calculation sub-unit, and a processing sub-unit.

The searching sub-unit is configured to, for each control point in the fusion field, search the point cloud corresponding to the current frame scanning image according to a preset radius, so as to obtain a target point cloud set of each control point.

The calculation sub-unit is configured to perform calculation based on weight of the target point cloud set, so as to obtain a weight value of each control point.

The acquisition calculation sub-unit is configured to acquire, from the point cloud corresponding to the current frame scanning image, a target point cloud with a smallest distance from each control point, and perform calculation based on a position, normal direction, and color of the target point cloud, so as to obtain a position, normal direction, and color of each control point.

The processing sub-unit is configured to obtain the score value of each control point based on the weight value, position, normal direction, and color of each control point.

In some embodiments of the present disclosure, the calculation sub-unit is specifically configured to perform the following operations.

A maximum weight value is acquired based on a weight value of the target point cloud set.

The maximum weight value is used as the weight value of each control point.

In some embodiments of the present disclosure, the rendering component 305 is specifically configured to perform the following operations.

When the weight of the display point in the display point cloud is less than or equal to a preset first threshold, the rendering color of the region in which the display point is located is determined as a first color.

When the weight of the display point in the display point cloud is greater than the first threshold and less than a preset second threshold, the rendering color of the region in which the display point is located is determined as a second color, where the first threshold is less than the second threshold.

When the weight of the display point in the display point cloud is greater than or equal to the second threshold, the rendering color of the region in which the display point is located is determined as a third color.

In some embodiments of the present disclosure, the apparatus further includes a third acquisition component, a weight determination component, a setup generation component, and a control adjustment component.

The third acquisition component is configured to acquire an image frame sample set. Each image frame has corresponding weight.

The weight determination component is configured to determine total weight of the image frame sample set based on the weight of each image frame.

The setup generation component is configured to set an initial threshold, and generate a rendering test result based on the total weight and the initial threshold.

The control adjustment component is configured to control the total weight to remain unchanged, adjust the initial threshold, and until the rendering test result changes, determine the second threshold.

In some embodiments of the present disclosure, the apparatus further includes a fourth acquisition component, a fifth acquisition component, an acquisition determination component, and a rendering display component.

The fourth acquisition component is configured to acquire all frame scanning images.

The fifth acquisition component is configured to acquire information of all control points in the fusion field according to point clouds corresponding to all frame scanning images, so as to obtain a total fusion field.

The acquisition determination component is configured to acquire a total display point cloud from the total fusion field, and determine a total rendering color based on a weight set of the total display point cloud.

The rendering display component is configured to render the total display point cloud based on the total rendering color, so as to obtain and display a total rendering result.

The apparatus for rendering scanning image provided in some embodiments of the present disclosure may execute the method for rendering scanning image provided in any embodiment of the present disclosure, and thus has corresponding functional components for performing the method and corresponding beneficial effects.

Embodiments of the present disclosure further provide a computer program product, including a computer program/instruction. The computer program/instruction, when being executed by a processor, implements the method for rendering scanning image provided in any embodiment of the present disclosure.

Fig. 4 is a schematic structural diagram of an electronic device according to embodiments of the present disclosure. Specifically referring to Fig. 4 below, the schematic structural diagram suitable for implementing the electronic device 400 in some embodiments of the present disclosure is shown. The electronic device 400 in some embodiments of the present disclosure may include, but is not limited to, mobile terminals such as cell phones, notebook computers, digital broadcast receivers, Personal Digital Assistant (PDA), tablet computers (PADs), Portable Multimedia Players (PMPs), vehicle terminals (e.g., vehicle navigation terminals), and the like, as well as fixed terminals such as digital TVs, desktop computers, and the like. The electronic device shown in Fig. 4 is only an example, and should not impose any limitations on the functionality and scope of use of embodiments of the present disclosure.

As shown in Fig. 4, the electronic device 400 may include a processing apparatus 401 (e.g., central processing unit, graphics processing unit, or the like), which may perform various appropriate actions and processing operations according to a program stored in a Read-Only Memory (ROM) 402 or a computer program loaded from a storage apparatus 408 into a Random Access Memory (RAM) 403. In the RAM 403, various programs and data required for the operation of the electronic device 400 may also be stored. The processing apparatus 401, the ROM 402, and the RAM 403 are connected to each other via a bus 404. An Input/Output (I/O) interface 405 is also connected to the bus 404.

Generally, the following apparatuses may be connected to the I/O interface 405: an input apparatus 406 including, for example, a touch screen, a touch pad, a keyboard, a mouse, a camera, a microphone, an accelerometer, a gyroscope, and the like; an output apparatus 407 including, for example, a Liquid Crystal Display (LCD), a loudspeaker, a vibrator, and the like; a storage apparatus 408 including, for example, a magnetic tape, a hard disk, and the like; and a communication apparatus 409. The communication apparatus 409 may allow the electronic device 400 to perform wireless or wire communication with other devices, so as to exchange data. Although Fig. 4 shows the electronic device 400 having various apparatuses, it should be understood that, it is not required to implement or have all of the shown apparatuses. More or fewer apparatuses may alternatively be implemented or possessed.

In particular, the process described above with reference to a flowchart may be implemented as a computer software program according to the disclosed embodiments of the present disclosure. For example, the disclosed embodiments of the present disclosure include a computer program product including a computer program carried on a non-transient computer-readable medium, and the computer program includes a program code for executing the method shown in the flowchart. In such an embodiment, the computer program may be downloaded and installed from the network through the communication apparatus 409, or installed from the storage apparatus 408, or installed from the ROM 402. When the computer program is executed by the processor 401, the above functions defined in the method for rendering scanning image in some embodiments of the present disclosure are executed.

It is to be noted that, the non-transitory computer-readable medium shown in the present disclosure may be a computer-readable signal medium or a computer-readable storage medium or any combination thereof. The non-transitory computer-readable storage medium, for example, may be, but not limited to, an electrical, magnetic, optical, electromagnetic, infrared, or semiconductor system, apparatus or device, or a combination of any of the above. More specific examples of the non-transitory computer-readable storage medium may include, but are not limited to, an electrical connection member including one or more wires, a portable computer disk, a hard disk, an RAM, an ROM, an Erasable Programmable Read-Only Memory (EPROM), a flash memory, optical fiber, a portable Compact Disc Read-Only Memory (CD-ROM), an optical storage device, a magnetic storage device, or any appropriate combination thereof. In the present disclosure, the non-transitory computer-readable storage medium may be any tangible medium that includes or stores a program. The program may be used by or in combination with an instruction execution system, an apparatus, or a device. In the present disclosure, the computer-readable signal medium may include a data signal that is propagated in a base band or propagated as a part of a carrier wave, which carries a computer-readable program code therein. The propagated data signal may adopt a plurality of forms including, but not limited to, an electromagnetic signal, an optical signal, or any suitable combination of the above. The computer-readable signal medium may also be any computer-readable medium other than the computer-readable storage medium. The computer-readable signal medium may send, propagate or transmit the program that is used by or in combination with the instruction execution system, the apparatus, or the device. The program code in the computer-readable medium may be transmitted with any proper medium, including, but not limited to, a wire, an optical cable, Radio Frequency (RF), etc., or any proper combination thereof.

In some implementations, a client or a server may communicate by using any currently known or future developed network protocol such as Hyper Text Transfer Protocol (HTTP) and may be interconnected with digital data communications (for example, communication networks) in any form or medium. Examples of a communication network include an LAN, a WAN, an inter-network (for example, the Internet), and an end-to-end network (for example, an ad hoc end-to-end network), as well as any currently known or future developed networks.

The non-transitory computer-readable medium may be included in the electronic device, or may also be present separately and not fitted into the electronic device.

The non-transitory computer-readable medium carries one or more programs. When the one or more programs are executed by the electronic device, the electronic device is enabled to be configured to: acquire a current frame scanning image; update information of all control points in a fusion field according to a point cloud corresponding to the current frame scanning image, so as to obtain a target fusion field; acquire a display point cloud from the target fusion field; determine a rendering color based on weight of the display point cloud; and render the display point cloud based on the rendering color, so as to obtain a rendering result.

The computer program code configured to execute operations in the present disclosure may be compiled by using one or more programming languages or a combination thereof. The programming languages include a programming language facing an object, such as Java, Smalltalk, and C++, and further include a conventional procedural programming language, such as "C" language, or similar programming languages. The program code may be completely executed in a computer of a user or partially executed in the computer of the user, executed as an independent software package, executed partially in the computer of the user and partially in a remote computer, or executed completely in the remote server or a server. In a situation involving the remote computer, the remote computer may be connected to the user computer by using any type of network including a local area network (LAN) or a wide area network (WAN), or may be connected to an external computer (for example, connected to the external computer through the Internet by using an Internet service provider).

The flowcharts and block diagrams in the drawings illustrate probably implemented system architectures, functions, and operations of the system, method, and computer program product according to various embodiments of the present disclosure. On this aspect, each block in the flowcharts or block diagrams may represent a component, a program segment, or a portion of a code, which includes one or more executable instructions for implementing the specified logic functions. It is also to be noted that, in certain alternative implementations, the functions marked in the blocks may also be realized in a sequence different from those marked in the drawings. For example, two blocks shown in succession may, in fact, be executed substantially in parallel, and sometimes in a reverse sequence, depending upon the functionality involved. It is also to be noted that each block of the block diagrams and/or flowcharts and combinations of blocks in the block diagrams and/or flowcharts may be implemented by dedicated hardware-based systems that execute the specified functions or operations, or may be implemented in a combination of dedicated hardware and computer instructions.

The units described in some embodiments of the present disclosure may be implemented by means of software or hardware. The name of the unit does not in some cases constitute a limitation of the unit itself.

The functions described above herein may be executed, at least in part, by one or more hardware logic components. For example, without limitation, exemplary types of hardware logic components that may be used include: a Field Programmable Gate Array (FPGA), an Application-Specific Integrated Circuit (ASIC), an Application-Specific Standard Product (ASSP), systems-on-chip (SOC), a Complex Programmable Logic Device (CPLD), and the like.

In the context of the present disclosure, a machine-readable medium may be a tangible medium, which may include or store a program for being used by an instruction execution system, device, or apparatus or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any foregoing suitable combinations. More specific examples of the machine-readable storage medium may include electrical connections based on one or more wires, a portable computer disk, a hard disk, an RAM, an ROM, an Erasable Programmable Read-Only Memory (EPROM or flash memory), an optical fiber, a portable Compact Disk Read-Only Memory (CD-ROM), an optical storage device, a magnetic storage device, or any above suitable combinations.

According to one or more embodiments of the present disclosure, the present disclosure provides an electronic device, including:
a processor; and
a memory configured to store an executable instruction of the processor.

The processor is configured to read the executable instruction from the memory, and execute the executable instruction to implement any one of the methods for rendering scanning image provided in the present disclosure.

According to one or more embodiments of the present disclosure, the present disclosure provides a computer-readable storage medium. The computer-readable storage medium stores a computer program. The computer program is configured to execute any one of the methods for rendering scanning image provided in the present disclosure.

It is to be noted that, relational terms such as "first" and "second" are used merely to distinguish one entity or operation from another entity or operation herein, and do not necessarily require or imply the existence of any such actual relationship or order between these entities or operations. Furthermore, terms "comprise", "include" or any other variants are intended to encompass non-exclusive inclusion, such that a process, a method, an article or a device including a series of elements not only include those elements, but also includes other elements not listed explicitly or includes intrinsic elements for the process, the method, the article, or the device. Without any further limitation, an element defined by the phrase "comprising one" does not exclude existence of other same elements in the process, the method, the article, or the device that includes the elements.

The above is merely the implementation of the present disclosure, to make those skilled in the art understand or implement the present disclosure. It is apparent that those skilled in the art will make many modifications to these embodiments, the general principles defined in the present disclosure may be achieved in the other embodiments without departing from the essential attributes of the present invention as defined by the claims. Therefore, the present disclosure will not be limited to the embodiments shown herein, but to conform to the maximum extent of principles and new features that are disclosed herein.

### Industrial Applicability

According to the method for rendering scanning image provided in the present disclosure, in a scanning process, the quality of a scanning surface may be prompted through real-time pseudo color rendering, so as to know which region needs to be scanned for more frames of images, thereby further improving the quality of a scanning model. Therefore, the method has strong industrial practicality.

## Claims

1. A method for rendering scanning image, comprising:
acquiring a current frame scanning image corresponding to a point cloud;
updating information of all control points in a fusion field according to the point cloud corresponding to the current frame scanning image, to obtain a target fusion field, the fusion field is composed of control points uniformly distributed, the control points are distributed on a scanning surface, and each control point controls scores within a certain range, and the information of all control points in the fusion field comprises positions, normal directions, colors and weight;
acquiring a display point cloud and weight of each display point in the display point cloud from the target fusion field, and based on the weight of each display point in the display point cloud, determining each display point and a rendering color of a region in which each display point is located, the weight represents a confidence level of the point cloud, and the weight is calculated based on a reconstruction algorithm;
and
rendering the display point cloud based on the rendering color, to obtain a rendering result and display the rendering result.

2. The method for rendering scanning image as claimed in claim 1, wherein updating the information of all control points in the fusion field according to the point cloud corresponding to the current frame scanning image, to obtain the target fusion field comprises:
acquiring parameter information of a point cloud corresponding to the current frame scanning image;
performing calculation based on the parameter information, to obtain a score value of each control point; and
obtaining the target fusion field based on the score value of each control point.

3. The method for rendering scanning image as claimed in claim 2, wherein, the parameter information comprises a weight value, a position, a normal direction, and a color; and performing calculation based on the parameter information, to obtain the score value of each control point comprises:
for each control point in the fusion field, searching the point cloud corresponding to the current frame scanning image according to a preset radius, to obtain a target point cloud set of each control point;
performing calculation based on weight of the target point cloud set, to obtain a weight value of each control point;
acquiring, from the point cloud corresponding to the current frame scanning image, a target point cloud with a smallest distance from each control point, and performing calculation based on a position, normal direction, and color of the target point cloud, to obtain a position, normal direction, and color of each control point; and
obtaining the score value of each control point based on the weight value, position, normal direction, and color of each control point.

4. The method for rendering scanning image as claimed in claim 3, wherein performing calculation based on the weight of the target point cloud set, to obtain the weight value of each control point comprises:
acquiring a maximum weight value based on a weight value of the target point cloud set; and
using the maximum weight value as the weight value of each control point.

5. The method for rendering scanning image as claimed in claim 1, wherein based on the weight of each display point in the display point cloud, determining each display point and the rendering color of the region in which each display point is located comprises:
in a case that the weight of the display point in the display point cloud is less than or equal to a preset first threshold, determining the rendering color of the region in which the display point is located as a first color;
in a case that the weight of the display point in the display point cloud is greater than the first threshold and less than a preset second threshold, determining the rendering color of the region in which the display point is located as a second color, wherein the first threshold is less than the second threshold; and
in a case that the weight of the display point in the display point cloud is greater than or equal to the second threshold, determining the rendering color of the region in which the display point is located as a third color.

6. The method for rendering scanning image as claimed in claim 5, further comprising:
acquiring an image frame sample set, wherein each image frame has corresponding weight;
determining total weight of the image frame sample set based on the weight of each image frame;
setting an initial threshold, and generating a rendering test result based on the total weight and the initial threshold; and
controlling the total weight to remain unchanged, adjusting the initial threshold, and until the rendering test result changes, determining the second threshold.

7. The method for rendering scanning image as claimed in any one of claims 1 to 6, further comprising:
acquiring all frame scanning images;
acquiring information of all control points in the fusion field according to point clouds corresponding to all frame scanning images, to obtain a total fusion field;
acquiring a total display point cloud from the total fusion field, and determining a total rendering color based on a weight set of the total display point cloud; and
rendering the total display point cloud based on the total rendering color, to obtain a total rendering result and display the total rendering result.

8. An apparatus for rendering scanning image, comprising:
a first acquisition component, configured to acquire a current frame scanning image corresponding to a point cloud;
an updating component, configured to update information of all control points in a fusion field according to the point cloud corresponding to the current frame scanning image, to obtain a target fusion field, the fusion field is composed of control points uniformly distributed, the control points are distributed on a scanning surface, and each control point controls scores within a certain range, and the information of all control points in the fusion field comprises positions, normal directions, colors and weight;
a second acquisition component, configured to acquire a display point cloud and weight of each display point in the display point cloud from the target fusion field, the weight represents a confidence level of the point cloud, and the weight is calculated based on a reconstruction algorithm;
a determination component, configured to, based on the weight of each display point in the display point cloud, determine each display point and a rendering color of a region in which each display point is located; and
a rendering component, configured to render the display point cloud based on the rendering color, to obtain and display a rendering result.

9. The apparatus for rendering scanning image as claimed in claim 8, the updating component comprises:
an acquisition unit, configured to acquire parameter information of a point cloud corresponding to the current frame scanning image;
a calculation unit, configured to perform calculation based on the parameter information, to obtain a score value of each control point; and
a processing unit, configured to obtain the target fusion field based on the score value of each control point.

10. The apparatus for rendering scanning image as claimed in claim 9, wherein the parameter information comprises a weight value, a position, a normal direction, and a color; the processing unit comprises:
a searching sub-unit, configured to, for each control point in the fusion field, search the point cloud corresponding to the current frame scanning image according to a preset radius, to obtain a target point cloud set of each control point;
a calculation sub-unit, configured to perform calculation based on weight of the target point cloud set, to obtain a weight value of each control point;
an acquisition calculation sub-unit, configured to acquire, from the point cloud corresponding to the current frame scanning image, a target point cloud with a smallest distance from each control point, and perform calculation based on a position, normal direction, and color of the target point cloud, to obtain a position, normal direction, and color of each control point; and
a processing sub-unit, configured to obtain the score value of each control point based on the weight value, position, normal direction, and color of each control point.

11. The apparatus for rendering scanning image as claimed in claim 10, the calculation sub-unit is configured to:
acquire a maximum weight value based on a weight value of the target point cloud set; and
use the maximum weight value as the weight value of each control point.

12. The apparatus for rendering scanning image as claimed in claim 8, the rendering component is configured to:
in a case that the weight of the display point in the display point cloud is less than or equal to a preset first threshold, determine the rendering color of the region in which the display point is located as a first color;
in a case that the weight of the display point in the display point cloud is greater than the first threshold and less than a preset second threshold, determine the rendering color of the region in which the display point is located as a second color, wherein the first threshold is less than the second threshold; and
in a case that the weight of the display point in the display point cloud is greater than or equal to the second threshold, determine the rendering color of the region in which the display point is located as a third color.

13. The apparatus for rendering scanning image as claimed in claim 12, the apparatus further comprises:
a third acquisition component, configured to acquire an image frame sample set, wherein each image frame has corresponding weight;
a weight determination component, configured to determine total weight of the image frame sample set based on the weight of each image frame;
a setup generation component, configured to set an initial threshold, and generate a rendering test result based on the total weight and the initial threshold; and
a control adjustment component, configured to control the total weight to remain unchanged, adjust the initial threshold, and until the rendering test result changes, determine the second threshold.

14. The apparatus for rendering scanning image as claimed in any one of claims 8 to 13, the apparatus further comprises:
a fourth acquisition component, configured to acquire all frame scanning images;
a fifth acquisition component, configured to acquire information of all control points in the fusion field according to point clouds corresponding to all frame scanning images, to obtain a total fusion field;
an acquisition determination component, configured to acquire a total display point cloud from the total fusion field, and determine a total rendering color based on a weight set of the total display point cloud; and
a rendering display component, configured to render the total display point cloud based on the total rendering color, to obtain a total rendering result and display the total rendering result.

## Patentansprüche

1. Verfahren zum Rendern eines Abtastbildes, umfassend:
Erfassen eines aktuellen Frame-Abtastbildes, das einer Punktwolke entspricht;
Aktualisieren von Informationen aller Steuerpunkte in einem Fusionsfeld gemäß der Punktwolke, die dem aktuellen Frame-Abtastbild entspricht, um ein Zielfusionsfeld zu erhalten, wobei das Fusionsfeld aus gleichmäßig verteilten Steuerpunkten zusammengesetzt ist, die Steuerpunkte auf einer Abtastoberfläche verteilt sind und jeder Steuerpunkt Bewertungen innerhalb eines bestimmten Bereichs steuert, und die Informationen aller Steuerpunkte in dem Fusionsfeld Positionen, Normalenrichtungen, Farben und Gewicht umfassen;
Erfassen einer Anzeigepunktwolke und eines Gewichts jedes Anzeigepunkts in der Anzeigepunktwolke aus dem Zielfusionsfeld, und, basierend auf dem Gewicht jedes Anzeigepunkts in der Anzeigepunktwolke, Bestimmen jedes Anzeigepunkts und einer Renderfarbe eines Bereichs, in dem sich jeder Anzeigepunkt befindet, wobei das Gewicht ein Vertrauensniveau der Punktwolke darstellt und das Gewicht basierend auf einem Rekonstruktionsalgorithmus berechnet wird; und
Rendern der Anzeigepunktwolke basierend auf der Renderfarbe, um ein Renderergebnis zu erhalten, und Anzeigen des Renderergebnisses.

2. Verfahren zum Rendern des Abtastbildes nach Anspruch 1, wobei das Aktualisieren der Informationen aller Steuerpunkte in dem Fusionsfeld gemäß der Punktwolke, die dem aktuellen Frame-Abtastbild entspricht, um das Zielfusionsfeld zu erhalten, umfasst:
Erfassen von Parameterinformationen einer Punktwolke, die dem aktuellen Frame-Abtastbild entspricht;
Durchführen einer Berechnung basierend auf den Parameterinformationen, um einen Bewertungswert jedes Steuerpunkts zu erhalten; und
Erhalten des Zielfusionsfeldes basierend auf dem Bewertungswert jedes Steuerpunkts.

3. Verfahren zum Rendern des Abtastbildes nach Anspruch 2, wobei die Parameterinformationen einen Gewichtswert, eine Position, eine Normalenrichtung und eine Farbe umfassen; und das Durchführen der Berechnung basierend auf den Parameterinformationen, um den Bewertungswert jedes Steuerpunkts zu erhalten, umfasst:
für jeden Steuerpunkt in dem Fusionsfeld, Durchsuchen der Punktwolke, die dem aktuellen Frame-Abtastbild entspricht, gemäß einem voreingestellten Radius, um einen Zielpunktwolkensatz jedes Steuerpunkts zu erhalten;
Durchführen der Berechnung basierend auf dem Gewicht des Zielpunktwolkensatzes, um einen Gewichtswert jedes Steuerpunkts zu erhalten;
Erfassen, aus der Punktwolke, die dem aktuellen Frame-Abtastbild entspricht, einer Zielpunktwolke mit einem kleinsten Abstand von jedem Steuerpunkt und Durchführen der Berechnung basierend auf einer Position, Normalenrichtung und Farbe der Zielpunktwolke, um eine Position, Normalenrichtung und Farbe jedes Steuerpunkts zu erhalten; und
Erhalten des Bewertungswerts jedes Steuerpunkts basierend auf dem Gewichtswert, der Position, der Normalenrichtung und der Farbe jedes Steuerpunkts.

4. Verfahren zum Rendern des Abtastbildes nach Anspruch 3, wobei das Durchführen der Berechnung basierend auf dem Gewicht des Zielpunktwolkensatzes, um den Gewichtswert jedes Steuerpunkts zu erhalten, umfasst:
Erfassen eines maximalen Gewichtswerts basierend auf einem Gewichtswert des Zielpunktwolkensatzes; und
Verwenden des maximalen Gewichtswerts als Gewichtswert jedes Steuerpunkts.

5. Verfahren zum Rendern des Abtastbildes nach Anspruch 1, wobei, basierend auf dem Gewicht jedes Anzeigepunktes in der Anzeigepunktwolke, das Bestimmen jedes Anzeigepunktes und der Renderfarbe des Bereichs, in dem sich jeder Anzeigepunkt befindet, umfasst:
in einem Fall, in dem das Gewicht des Anzeigepunkts in der Anzeigepunktwolke kleiner als oder gleich einem voreingestellten ersten Schwellenwert ist, Bestimmen der Renderfarbe des Bereichs, in dem sich der Anzeigepunkt befindet, als eine erste Farbe;
in einem Fall, in dem das Gewicht des Anzeigepunkts in der Anzeigepunktwolke größer als der erste Schwellenwert und kleiner als ein voreingestellter zweiter Schwellenwert ist, Bestimmen der Renderfarbe des Bereichs, in dem sich der Anzeigepunkt befindet, als eine zweite Farbe, wobei der erste Schwellenwert kleiner als der zweite Schwellenwert ist; und
in einem Fall, in dem das Gewicht des Anzeigepunkts in der Anzeigepunktwolke größer als oder gleich dem zweiten Schwellenwert ist, Bestimmen der Renderfarbe des Bereichs, in dem sich der Anzeigepunkt befindet, als eine dritte Farbe.

6. Verfahren zum Rendern des Abtastbildes nach Anspruch 5, ferner umfassend:
Erfassen eines Bild-Frame-Probensatzes, wobei jeder Frame ein entsprechendes Gewicht aufweist;
Bestimmen des Gesamtgewichts des Bild-Frame-Probensatzes basierend auf dem Gewicht jedes Frames;
Einstellen eines anfänglichen Schwellenwerts und Erzeugen eines Rendertestergebnisses basierend auf dem Gesamtgewicht und dem anfänglichen Schwellenwert; und
Steuern des Gesamtgewichts derart, dass es unverändert bleibt, Anpassen des anfänglichen Schwellenwerts und, bis sich das Rendertestergebnis ändert, Bestimmen des zweiten Schwellenwerts.

7. Verfahren zum Rendern des Abtastbildes nach einem der Ansprüche 1 bis 6, ferner umfassend:
Erfassen aller Frame-Abtastbilder;
Erfassen von Informationen aller Steuerpunkte in dem Fusionsfeld gemäß Punktwolken, die allen Frame-Abtastbildern entsprechen, um ein Gesamtfusionsfeld zu erhalten;
Erfassen einer Gesamtanzeigepunktwolke aus dem Gesamtfusionsfeld und Bestimmen einer Gesamtrenderfarbe basierend auf einem Gewichtssatz der Gesamtanzeigepunktwolke; und
Rendern der Gesamtanzeigepunktwolke basierend auf der Gesamtrenderfarbe, um ein Gesamtrenderergebnis zu erhalten und das Gesamtrenderergebnis anzuzeigen.

8. Vorrichtung zum Rendern des Abtastbildes, umfassend:
eine erste Erfassungskomponente, die konfiguriert ist, um ein aktuelles Frame-Abtastbild zu erfassen, das einer Punktwolke entspricht;
eine Aktualisierungskomponente, die konfiguriert ist, um Informationen aller Steuerpunkte in einem Fusionsfeld gemäß der Punktwolke, die dem aktuellen Frame-Abtastbild entspricht, zu aktualisieren, um ein Zielfusionsfeld zu erhalten, wobei das Fusionsfeld aus gleichmäßig verteilten Steuerpunkten zusammengesetzt ist, die Steuerpunkte auf einer Abtastoberfläche verteilt sind und jeder Steuerpunkt Bewertungen innerhalb eines bestimmten Bereichs steuert, und die Informationen aller Steuerpunkte in dem Fusionsfeld Positionen, Normalenrichtungen, Farben und Gewicht umfassen;
eine zweite Erfassungskomponente, die konfiguriert ist, um eine Anzeigepunktwolke und ein Gewicht jedes Anzeigepunkts in der Anzeigepunktwolke aus dem Zielfusionsfeld zu erfassen, wobei das Gewicht ein Vertrauensniveau der Punktwolke darstellt und das Gewicht basierend auf einem Rekonstruktionsalgorithmus berechnet wird;
eine Bestimmungskomponente, die konfiguriert ist, um basierend auf dem Gewicht jedes Anzeigepunkts in der Anzeigepunktwolke jeden Anzeigepunkt und eine Renderfarbe eines Bereichs zu bestimmen, in dem sich jeder Anzeigepunkt befindet; und
eine Renderkomponente, die konfiguriert ist, um die Anzeigepunktwolke basierend auf der Renderfarbe zu rendern, um ein Renderergebnis zu erhalten und anzuzeigen.

9. Vorrichtung zum Rendern des Abtastbildes nach Anspruch 8, wobei die Aktualisierungskomponente umfasst:
eine Erfassungseinheit, die konfiguriert ist, um Parameterinformationen einer Punktwolke zu erfassen, die dem aktuellen Frame-Abtastbild entspricht;
eine Berechnungseinheit, die konfiguriert ist, um die Berechnung basierend auf den Parameterinformationen durchzuführen, um einen Bewertungswert jedes Steuerpunkts zu erhalten; und
eine Verarbeitungseinheit, die konfiguriert ist, um das Zielfusionsfeld basierend auf dem Bewertungswert jedes Steuerpunkts zu erhalten.

10. Vorrichtung zum Rendern des Abtastbildes nach Anspruch 9, wobei die Parameterinformationen einen Gewichtswert, eine Position, eine Normalenrichtung und eine Farbe umfassen; die Verarbeitungseinheit umfasst:
eine Suchuntereinheit, die konfiguriert ist, um für jeden Steuerpunkt in dem Fusionsfeld die Punktwolke, die dem aktuellen Frame-Abtastbild entspricht, gemäß einem voreingestellten Radius zu durchsuchen, um einen Zielpunktwolkensatz jedes Steuerpunkts zu erhalten;
eine Berechnungsuntereinheit, die konfiguriert ist, um die Berechnung basierend auf dem Gewicht des Zielpunktwolkensatzes durchzuführen, um einen Gewichtswert jedes Steuerpunkts zu erhalten;
eine Erfassungsberechnungsuntereinheit, die konfiguriert ist, um aus der Punktwolke, die dem aktuellen Frame-Abtastbild entspricht, eine Zielpunktwolke mit einem kleinsten Abstand zu jedem Steuerpunkt zu erfassen und die Berechnung basierend auf einer Position, Normalenrichtung und Farbe der Zielpunktwolke durchzuführen, um eine Position, Normalenrichtung und Farbe jedes Steuerpunkts zu erhalten; und
eine Verarbeitungsuntereinheit, die konfiguriert ist, um den Bewertungswert jedes Steuerpunkts basierend auf dem Gewichtswert, der Position, der Normalenrichtung und der Farbe jedes Steuerpunkts zu erhalten.

11. Vorrichtung zum Rendern des Abtastbildes nach Anspruch 10, wobei die Berechnungsuntereinheit konfiguriert ist zum:
Erfassen eines maximalen Gewichtswerts basierend auf einem Gewichtswert des Zielpunktwolkensatzes; und
Verwenden des maximalen Gewichtswerts als den Gewichtswert jedes Steuerpunkts.

12. Einrichtung zum Rendern des Abtastbildes nach Anspruch 8, wobei die Renderkomponente konfiguriert ist zum:
in einem Fall, in dem das Gewicht des Anzeigepunkts in der Anzeigepunktwolke kleiner als oder gleich einem voreingestellten ersten Schwellenwert ist, Bestimmen der Renderfarbe des Bereichs, in dem sich der Anzeigepunkt befindet, als eine erste Farbe;
in einem Fall, in dem das Gewicht des Anzeigepunkts in der Anzeigepunktwolke größer als der erste Schwellenwert und kleiner als ein voreingestellter zweiter Schwellenwert ist, Bestimmen der Renderfarbe des Bereichs, in dem sich der Anzeigepunkt befindet, als eine zweite Farbe, wobei der erste Schwellenwert kleiner als der zweite Schwellenwert ist; und
in einem Fall, in dem das Gewicht des Anzeigepunkts in der Anzeigepunktwolke größer als oder gleich dem zweiten Schwellenwert ist, Bestimmen der Renderfarbe des Bereichs, in dem sich der Anzeigepunkt befindet, als eine dritte Farbe.

13. Vorrichtung zum Rendern des Abtastbildes nach Anspruch 12, wobei die Vorrichtung ferner umfasst:
eine dritte Erfassungskomponente, die konfiguriert ist, um einen Frame-Probensatz zu erfassen, wobei jeder Frame ein entsprechendes Gewicht aufweist;
eine Gewichtsbestimmungskomponente, die konfiguriert ist, um das Gesamtgewicht des Frame-Probensatzes basierend auf dem Gewicht jedes Frames zu bestimmen;
eine Einstellungserzeugungskomponente, die konfiguriert ist, um einen anfänglichen Schwellenwert einzustellen und basierend auf dem Gesamtgewicht und dem anfänglichen Schwellenwert ein Rendertestergebnis zu erzeugen; und
eine Steueranpassungskomponente, die konfiguriert ist, um das Gesamtgewicht zu steuern, um unverändert zu bleiben
Anpassen des anfänglichen Schwellenwerts und, bis sich das Rendertestergebnis ändert, Bestimmen des zweiten Schwellenwerts.

14. Verfahren zum Rendern des Abtastbildes nach einem der Ansprüche 8 bis 13, wobei das Verfahren ferner umfasst:
eine vierte Erfassungskomponente, die konfiguriert ist, um alle Frame-Abtastbilder zu erfassen;
eine fünfte Erfassungskomponente, die konfiguriert ist, um Informationen aller Steuerpunkte in dem Fusionsfeld gemäß Punktwolken zu erfassen, die allen Frame-Abtastbildern entsprechen, um ein Gesamtfusionsfeld zu erhalten;
eine Erfassungsbestimmungskomponente, die konfiguriert ist, um eine Gesamtanzeigepunktwolke aus dem Gesamtfusionsfeld zu erfassen und basierend auf einem Gewichtssatz der Gesamtanzeigepunktwolke eine Gesamtrenderfarbe zu bestimmen; und
eine Renderanzeigekomponente, die konfiguriert ist, um die Gesamtanzeigepunktwolke basierend auf der Gesamt-Renderfarbe zu rendern, um ein Gesamt-Renderergebnis zu erhalten und das Gesamt-Renderergebnis anzuzeigen.

## Revendications

1. Procédé de restitution d'image de balayage, comprenant :
l'acquisition d'une image de balayage de trame actuelle correspondant à un nuage de points ;
la mise à jour d'informations de tous les points de contrôle dans un champ de fusion selon le nuage de points correspondant à l'image de balayage de trame actuelle, pour obtenir un champ de fusion cible, le champ de fusion est composé de points de contrôle uniformément répartis, les points de contrôle sont répartis sur une surface de balayage, et chaque point de contrôle contrôle des scores dans une certaine plage, et les informations de tous les points de contrôle dans le champ de fusion comprennent des positions, des directions normales, des couleurs et un poids ;
l'acquisition d'un nuage de points d'affichage et d'un poids de chaque point d'affichage dans le nuage de points d'affichage à partir du champ de fusion cible, et sur la base du poids de chaque point d'affichage dans le nuage de points d'affichage, la détermination de chaque point d'affichage et d'une couleur de restitution d'une région dans laquelle se trouve chaque point d'affichage, le poids représente un niveau de confiance du nuage de points, et le poids est calculé en fonction d'un algorithme de reconstruction ; et
la restitution du nuage de points d'affichage sur la base de la couleur de restitution, afin d'obtenir un résultat de restitution et afficher le résultat de restitution.

2. Procédé de restitution d'image de balayage selon la revendication 1, dans lequel la mise à jour des informations de tous les points de contrôle dans le champ de fusion selon le nuage de points correspondant à l'image de balayage de trame actuelle, pour obtenir le champ de fusion cible comprend :
l'acquisition d'informations de paramètres d'un nuage de points correspondant à l'image de balayage de trame actuelle ;
la réalisation d'un calcul sur la base des informations de paramètres, afin d'obtenir une valeur de score de chaque point de contrôle ; et
l'obtention du champ de fusion cible sur la base de la valeur de score de chaque point de contrôle.

3. Procédé de restitution d'image de balayage selon la revendication 2, dans lequel les informations de paramètres comprennent une valeur de poids, une position, une direction normale et une couleur ; et la réalisation d'un calcul sur la base des informations de paramètres, afin d'obtenir la valeur de score de chaque point de contrôle comprend :
pour chaque point de contrôle dans le champ de fusion, la recherche dans le nuage de points correspondant à l'image de balayage de trame actuelle selon un rayon prédéfini, afin d'obtenir un ensemble de nuages de points cible de chaque point de contrôle ;
la réalisation d'un calcul sur la base du poids de l'ensemble de nuages de points cible, afin d'obtenir une valeur de poids de chaque point de contrôle ;
l'acquisition, à partir du nuage de points correspondant à l'image de balayage de trame actuelle, d'un nuage de points cible à la plus petite distance de chaque point de contrôle, et la réalisation d'un calcul sur la base d'une position, d'une direction normale et d'une couleur du nuage de points cible, afin d'obtenir une position, une direction normale et une couleur de chaque point de contrôle ; et
l'obtention de la valeur de score de chaque point de contrôle sur la base de la valeur de poids, de la position, de la direction normale et de la couleur de chaque point de contrôle.

4. Procédé de restitution d'image de balayage selon la revendication 3, dans lequel la réalisation d'un calcul sur la base du poids de l'ensemble de nuages de points cible, afin d'obtenir la valeur de poids de chaque point de contrôle comprend :
l'acquisition d'une valeur de poids maximale sur la base d'une valeur de poids de l'ensemble de nuages de points cible ; et
l'utilisation de la valeur de poids maximale comme valeur de poids de chaque point de contrôle.

5. Procédé de restitution d'image de balayage selon la revendication 1, dans lequel sur la base du poids de chaque point d'affichage dans le nuage de points d'affichage, la détermination de chaque point d'affichage et de la couleur de restitution de la région dans laquelle se trouve chaque point d'affichage comprend :
dans le cas où le poids du point d'affichage dans le nuage de points d'affichage est inférieur ou égal à un premier seuil prédéfini, la détermination de la couleur de restitution de la région dans laquelle se trouve le point d'affichage en tant que première couleur ;
dans le cas où le poids du point d'affichage dans le nuage de points d'affichage est supérieur au premier seuil et inférieur à un second seuil prédéfini, la détermination de la couleur de restitution de la région dans laquelle se trouve le point d'affichage en tant que seconde couleur, dans lequel le premier seuil est inférieur au second seuil ; et
dans le cas où le poids du point d'affichage dans le nuage de points d'affichage est supérieur ou égal au second seuil, la détermination de la couleur de restitution de la région dans laquelle se trouve le point d'affichage en tant que troisième couleur.

6. Procédé de restitution d'image de balayage selon la revendication 5, comprenant en outre :
l'acquisition d'un ensemble d'échantillons de trame d'image, dans lequel chaque trame d'image a un poids correspondant ;
la détermination du poids total de l'ensemble d'échantillons de trame d'image sur la base du poids de chaque trame d'image ;
la définition d'un seuil initial et la génération d'un résultat de test de restitution sur la base du poids total et du seuil initial ; et
le contrôle du poids total de manière à ce qu'il reste inchangé, l'ajustement du seuil initial, et jusqu'à ce que le résultat du test de restitution change, la détermination du second seuil.

7. Procédé de restitution d'image de balayage selon l'une quelconque des revendications 1 à 6, comprenant en outre :
l'acquisition de toutes les images de balayage de trame ;
l'acquisition d'informations de tous les points de contrôle dans le champ de fusion selon des nuages de points correspondant à toutes les images de balayage de trame, afin d'obtenir un champ de fusion total ;
l'acquisition d'un nuage de points d'affichage total à partir du champ de fusion total, et la détermination d'une couleur de restitution totale sur la base d'un ensemble de poids du nuage de points d'affichage total ; et
la restitution du nuage de points d'affichage total sur la base de la couleur de restitution totale, afin d'obtenir un résultat de restitution totale et afficher le résultat de restitution totale.

8. Appareil de restitution d'image de balayage, comprenant :
un premier composant d'acquisition, configuré pour acquérir une image de balayage de trame actuelle correspondant à un nuage de points ;
un composant de mise à jour, configuré pour mettre à jour les informations de tous les points de contrôle dans un champ de fusion selon le nuage de points correspondant à l'image de balayage de trame actuelle, pour obtenir un champ de fusion cible, le champ de fusion est composé de points de contrôle uniformément répartis, les points de contrôle sont répartis sur une surface de balayage, et chaque point de contrôle contrôle des scores dans une certaine plage, et les informations de tous les points de contrôle dans le champ de fusion comprennent des positions, des directions normales, des couleurs et un poids ;
un deuxième composant d'acquisition, configuré pour acquérir un nuage de points d'affichage et un poids de chaque point d'affichage dans le nuage de points d'affichage à partir du champ de fusion cible, le poids représente un niveau de confiance du nuage de points, et le poids est calculé sur la base d'un algorithme de reconstruction ;
un composant de détermination, configuré pour, sur la base du poids de chaque point d'affichage dans le nuage de points d'affichage, déterminer chaque point d'affichage et une couleur de restitution d'une région dans laquelle chaque point d'affichage est situé ; et
un composant de restitution, configuré pour restituer le nuage de points d'affichage sur la base de la couleur de restitution, afin d'obtenir et d'afficher un résultat de restitution.

9. Appareil de restitution d'image de balayage selon la revendication 8, le composant de mise à jour comprend :
une unité d'acquisition, configurée pour acquérir des informations de paramètres d'un nuage de points correspondant à l'image de balayage de trame actuelle ;
une unité de calcul, configurée pour effectuer un calcul sur la base des informations de paramètres, afin d'obtenir une valeur de score de chaque point de contrôle ; et
une unité de traitement, configurée pour obtenir le champ de fusion cible sur la base de la valeur de score de chaque point de contrôle.

10. Appareil de restitution d'image de balayage selon la revendication 9, dans lequel les informations de paramètres comprennent une valeur de poids, une position, une direction normale et une couleur ; l'unité de traitement comprend :
une sous-unité de recherche, configurée pour, par rapport à chaque point de contrôle dans le champ de fusion, rechercher le nuage de points correspondant à l'image de balayage de trame actuelle selon un rayon prédéfini, afin d'obtenir un ensemble de nuages de points cible de chaque point de contrôle ;
une sous-unité de calcul, configurée pour effectuer un calcul sur la base du poids de l'ensemble de nuages de points cible, afin d'obtenir une valeur de poids de chaque point de contrôle ;
une sous-unité de calcul d'acquisition, configurée pour acquérir, à partir du nuage de points correspondant à l'image de balayage de trame actuelle, un nuage de points cible à la plus petite distance de chaque point de contrôle, et réaliser un calcul sur la base d'une position, d'une direction normale et d'une couleur du nuage de points cible, afin d'obtenir une position, une direction normale et une couleur de chaque point de contrôle ; et
une sous-unité de traitement, configurée pour obtenir la valeur de score de chaque point de contrôle sur la base de la valeur de poids, de la position, de la direction normale et de la couleur de chaque point de contrôle.

11. Appareil de restitution d'image de balayage selon la revendication 10, la sous-unité de calcul est configurée pour :
acquérir une valeur de poids maximale sur la base d'une valeur de poids de l'ensemble de nuages de points cible ; et
utiliser la valeur de poids maximale comme valeur de poids de chaque point de contrôle.

12. Appareil de restitution d'image de balayage selon la revendication 8, le composant de restitution est configuré pour :
dans le cas où le poids du point d'affichage dans le nuage de points d'affichage est inférieur ou égal à un premier seuil prédéfini, déterminer la couleur de restitution de la région dans laquelle se trouve le point d'affichage en tant que première couleur ;
dans le cas où le poids du point d'affichage dans le nuage de points d'affichage est supérieur au premier seuil et inférieur à un second seuil prédéfini, déterminer la couleur de restitution de la région dans laquelle se trouve le point d'affichage en tant que seconde couleur, dans lequel le premier seuil est inférieur au second seuil ; et
dans le cas où le poids du point d'affichage dans le nuage de points d'affichage est supérieur ou égal au second seuil, déterminer la couleur de restitution de la région dans laquelle se trouve le point d'affichage en tant que troisième couleur.

13. Appareil de restitution d'image de balayage selon la revendication 12, l'appareil comprend en outre :
un troisième composant d'acquisition, configuré pour acquérir un ensemble d'échantillons de trame d'image, dans lequel chaque trame d'image a un poids correspondant ;
un composant de détermination de poids, configuré pour déterminer le poids total de l'ensemble d'échantillons de trame d'image sur la base du poids de chaque trame d'image ;
un composant de génération de configuration, configuré pour définir un seuil initial, et générer un résultat de test de restitution sur la base du poids total et du seuil initial ; et
un composant d'ajustement de contrôle, configuré pour contrôler le poids total de manière à ce qu'il reste inchangé
ajuster le seuil initial, et jusqu'à ce que le résultat du test de restitution change, déterminer le second seuil.

14. Appareil de restitution d'image de balayage selon l'une quelconque des revendications 8 à 13, l'appareil comprend en outre :
un quatrième composant d'acquisition, configuré pour acquérir toutes les images de balayage de trame ;
un cinquième composant d'acquisition, configuré pour acquérir des informations de tous les points de contrôle dans le champ de fusion selon des nuages de points correspondant à toutes les images de balayage de trame, afin d'obtenir un champ de fusion total ;
un composant de détermination d'acquisition, configuré pour acquérir un nuage de points d'affichage total à partir du champ de fusion total, et déterminer une couleur de restitution totale sur la base d'un ensemble de poids du nuage de points d'affichage total ; et
un composant d'affichage de restitution, configuré pour restituer le nuage de points d'affichage total sur la base de la couleur de restitution totale, afin d'obtenir un résultat de restitution totale et d'afficher le résultat de restitution totale.
